# EUROPEAN PATENT APPLICATION

(11) **EP 4 797 411 A1**
(43) Date of publication of application: **26.08.2026**
(21) Application number: 24878399.5
(22) Date of filing: 22.04.2024
(51) Int. Cl.: H01M 50/30, H01M 50/35, H01M 50/367

(54) **BATTERY CELL, BATTERY, AND ELECTRIC DEVICE**

(30) Priority: 20.10.2023 CN 202311370295
(71) Applicant: Contemporary Amperex Technology Co., Limited, Ningde, Fujian 352100 (CN)
(72) Inventor: WU, Kai, Ningde, Fujian 352100 (CN); HAN, Fengsheng, Ningde, Fujian 352100 (CN); NIU, Shaojun, Ningde, Fujian 352100 (CN)
(74) Representative: Gong, Jinping
(86) International application number: PCT/CN2024/089186
(87) International publication number: WO 2025/081746

(57) **Abstract**

A battery cell (100), a battery (1000), and an electric device are provided. The battery cell (100) includes: a housing (20), where the housing (20) defines an accommodating cavity (21), and an explosion-proof valve is disposed at a bottom of the housing (20); and a bottom support (10), where the bottom support (10) is disposed on a bottom wall of the accommodating cavity (21). The bottom support (10)includes: a support plate (11), where a side surface of the support plate (11) facing the bottom wall of the accommodating cavity (21) is a first surface; and a support frame (12), where the support frame (12) includes at least one first support rib (121), and the at least one first support rib (121) is disposed on the first surface, extends along a length direction of the support plate (11), and is arranged on at least one side edge of the support plate (11) in a width direction. A gas flow channel (13) in communication with the explosion-proof valve is defined between the first support rib (121), the first surface, and the bottom wall of the accommodating cavity (21).

## Description

### CROSS-REFERENCE TO RELATED APPLICATIONS

This application is based on and claims priority to the Chinese Patent Application No. 202311370295.7, filed on October 20, 2023, which is incorporated herein by reference in its entirety.

### TECHNICAL FIELD

This application relates to the field of battery technology, and in particular, to a battery cell, a battery, and an electric device.

### BACKGROUND

In the related art, it is indicated that during the production of battery cells at present, ultra-thin separators are introduced and used, and the ultra-thin separators used decrease the volume of the electrode assembly, decrease the group margin, and increase the energy density, thereby providing room for increasing the capacity of the electrode assembly. As the capacity of the electrode assembly increases, the amount of gas generated in the battery cell also increases accordingly, and the probability of thermal runaway in the battery cell and the risk of cracking of the housing weld caused by excessive pressure also increase accordingly.

Moreover, currently, to prevent the released gas and particles from entering the passenger compartment, the explosion-proof valve is disposed at the bottom of the battery cell. However, this solution tends to cause unsmooth gas exhaust, making it difficult for the gas to flow to the explosion-proof valve and be discharged in a timely manner, which further increases the probability of thermal runaway in the battery cell.

### SUMMARY

This application aims to solve at least one of the technical problems existing in the prior art. To this end, this application provides a battery cell. According to the battery cell, a large discharge space may be formed inside the battery cell, so that a large amount of gas generated during the cycling of the battery cell can be guided to an explosion-proof valve through a gas flow channel and discharged through the explosion-proof valve, thereby improving the gas exhaust effect, effectively reducing an internal pressure of the battery cell, and reducing the probability of thermal runaway in the battery cell and the risk of cracking of a housing weld caused by excessive pressure.

This application further provides a battery having the above battery cell.

This application further provides an electric device having the above battery.

According to a first aspect of this application, a battery cell includes: a housing, where the housing defines an accommodating cavity, and an explosion-proof valve is disposed at a bottom of the housing; a bottom support, where the bottom support is disposed on a bottom wall of the accommodating cavity, the bottom support includes: a support plate, where a side surface of the support plate facing the bottom wall of the accommodating cavity is a first surface; and a support frame, where the support frame includes at least one first support rib, the first support rib is disposed on the first surface and extends along a length direction of the support plate, at least one of the first support ribs is disposed on the first surface and respectively arranged on at least one side edge of the support plate in a width direction, and a gas flow channel in communication with the explosion-proof valve is defined between the first support rib, the first surface, and the bottom wall of the accommodating cavity; and an electrode assembly, where the electrode assembly is disposed in the accommodating cavity and supported on a second surface of the support plate, and the first surface and the second surface are disposed opposite each other in a thickness direction of the support plate.

According to the battery cell of this application, the gas flow channel jointly defined by the bottom support and the bottom wall of the accommodating cavity is provided, so that a large discharge space may be formed inside the battery cell, thereby allowing a large amount of gas generated during the cycling of the battery cell to be guided to the explosion-proof valve through the gas flow channel and discharged through the explosion-proof valve, thereby improving the gas exhaust effect of the battery cell, effectively reducing an internal pressure of the battery cell, and reducing the probability of thermal runaway in the battery cell and the risk of cracking of a housing weld caused by excessive pressure.

According to an embodiment of this application, two first support ribs are provided, and the two first support ribs are respectively arranged at two side edges of the support plate in the width direction; and the two first support ribs are at least partially flush with the two side edges of the support plate in the width direction respectively.

In this embodiment, the two first support ribs are provided, and the two first support ribs are at least partially flush with the two side edges of the support plate in the width direction respectively. This can effectively reduce the probability of formation of a flow stagnation region between the first support rib and the edge of the support plate, effectively reduce the swelling caused by the accumulation of the gas flow at a junction between the first support rib and the support plate, and allow a large amount of gas to enter the gas flow channel from two ends of the gas flow channel, thereby improving the gas exhaust effect. In addition, this can also increase a cross-sectional area of the gas flow channel, thereby further increasing the gas exhaust space of the bottom support and improving the gas exhaust effect.

According to an embodiment of this application, the first support rib extends from one end to the other end in the length direction of the support plate, and in a direction from the two ends to the middle in the length direction of the support plate, a width of the first support rib in the width direction of the support plate gradually increases.

In this embodiment, the width of the first support rib is set to gradually increase in the direction from the two ends to the middle in the length direction of the support plate, so that the structural strength of the middle of the support plate can be improved, effectively increasing the support effect of the bottom support, thereby effectively reducing the risk of the bottom support being crushed, and ensuring the smoothness of the gas exhaust. In addition, a flow rate of the gas flow in the gas flow channel can also be increased, improving the gas exhaust effect, thereby reducing the probability of thermal runaway in the battery cell and the risk of cracking of the housing weld caused by excessive pressure.

According to an embodiment of this application, in a direction from one end to the other end in the length direction of the support plate, a side edge of the first support rib facing the gas flow channel extends along an arc protruding toward the gas flow channel.

In this embodiment, the side edge of the first support rib facing the gas flow channel extends along the arc protruding toward the gas flow channel, so that the generation of vortices can be reduced, and the occurrence of boundary layer separation can be reduced. This can increase the flow rate of the gas flow, allowing the gas flow entering the gas flow channel to be quickly guided to the position of the explosion-proof valve, thereby quickly reducing the internal pressure of the battery cell, and reducing the probability of thermal runaway in the battery cell and the risk of cracking of the housing weld caused by excessive pressure.

According to an embodiment of this application, the side edge of the first support rib extends along a circular arc, and a diameter of the circular arc is 130 mm-180 mm.

In this embodiment, the diameter of the circular arc is set to be 130 mm-180 mm, so that the curvature of the first support rib is not excessively large, facilitating the smooth flow of the gas flow, reducing the resistance in the flow process, and improving the gas exhaust effect of the gas flow. In addition, the curvature of the first support rib is not excessively small, helping to reduce the generation of flow boundary layer vortices, thereby increasing the flow rate, and improving the gas exhaust effect.

According to an embodiment of this application, in the width direction of the support plate, widths of two ends of the first support rib in the length direction of the support plate are 8 mm-11 mm.

In this embodiment, the widths of the two ends of the first support rib in the length direction of the support plate are 8 mm-11 mm. This allows structural strength and support performance of the first support rib to meet the support performance required by the bottom support, reducing the risk of the bottom support being crushed. In addition, this can also ensure a flow area of the gas flow channel, thereby ensuring the gas exhaust space and improving the gas exhaust effect.

According to an embodiment of this application, in the width direction of the support plate, a maximum width of the first support rib is 12 mm-16 mm.

In this embodiment, the maximum width of the first support rib is set to 12 mm-16 mm, so that the structural strength of the bottom support can be increased, reducing the probability of deformation of the bottom support and the risk of the bottom support being crushed, thereby reducing the probability of thermal runaway in the battery cell caused by an unsmooth gas exhaust path.

According to an embodiment of this application, the support frame further includes two second support ribs, the second support ribs extend along the length direction of the support plate and are disposed between the two first support ribs, and the two second support ribs are respectively arranged at two ends of the support plate in the length direction.

In this embodiment, with the second support ribs provided, support points of the support frame for the support plate can be increased, so that the structural strength and support strength of the support frame can be further improved, further reducing the risk of the bottom support being crushed, thereby reducing the probability of thermal runaway in the battery cell caused by the unsmooth gas exhaust path.

According to an embodiment of this application, in the length direction of the support plate, one end of the second support rib is flush with an end edge of the support plate in the length direction.

In this embodiment, in the length direction of the support plate, one end of the second support rib is set to be flush with the end edge of the support plate in the length direction, so that the structural strength at two ends of the bottom support in a length direction can be improved. This can effectively prevent a gas flow inlet from being crushed, allowing the gas flow to smoothly enter the gas flow channel and be guided along the gas flow channel to the explosion-proof valve, and allowing the gas to be discharged to the outside of the battery cell, thereby reducing the occurrence of thermal runaway in the battery cell. In addition, this can also effectively prevent the formation of a flow stagnation region between the second support rib and the support plate, ensuring the smoothness of the gas flow, thereby improving the gas exhaust effect.

According to an embodiment of this application, in the length direction of the support plate, a length of the second support rib is 20 mm-30 mm.

In this embodiment, the length of the second support rib is set to be 20 mm-30 mm, so that the length of the second support rib is not excessively large. This helps to increase the flow area of the gas flow channel, increasing the flow space of the gas flow, and improving the gas exhaust effect of the bottom support. In addition, the length of the second support rib is not excessively small, allowing the support strength of the support frame to meet the structural strength required by the bottom support, thereby reducing the risk of the bottom support being crushed, and improving the use reliability and service life of the battery cell.

According to an embodiment of this application, in the length direction of the support plate, a ratio of the length of the second support rib to a length of the support plate is 0.07-0.12.

In this embodiment, the ratio of the length of the second support rib to the length of the support plate is set to be 0.07-0.12. This can effectively increase the flow area of the gas flow channel, increasing the gas exhaust space, and making the gas exhaust path smoother, thereby accelerating the gas exhaust, reducing the internal pressure of the battery cell, and improving the use reliability and service life of the battery cell. In addition, this also allows the second support rib to meet the support strength required by the bottom support, effectively reducing the risk of the bottom support being crushed, reducing the probability of gas exhaust failure of the bottom support, and improving the gas exhaust effect, thereby reducing the probability of thermal runaway in the battery cell, and improving the use reliability and service life of the battery cell.

According to an embodiment of this application, an end surface of the other end of the second support rib is an arc surface protruding in a direction facing away from the end edge of the support plate.

In this embodiment, the end surface of the other end of the second support rib is set as the arc surface protruding in the direction facing away from the end edge of the support plate, so that the probability of vortex generation can be effectively reduced, increasing the flow rate of the gas flow, and allowing the gas generated inside the battery cell to quickly flow to the explosion-proof valve and be discharged to the outside of the battery cell, thereby effectively reducing the occurrence of thermal runaway in the battery cell.

According to an embodiment of this application, the gas flow channel includes a guide section and a confluence region; two guide sections are provided and respectively connected to two sides of the confluence region in the length direction of the support plate; at least one side wall of the guide section in the width direction of the support plate is provided with a guide inclined surface; and in a direction from the guide section to the confluence region, the guide inclined surfaces of the two guide sections respectively extend obliquely toward two sides of the confluence region in the width direction of the support plate.

In this embodiment, the guide section is provided, so that the gas can be guided to flow smoothly, making the overall flow more orderly, helping to achieve directional flowing of the gas, thereby improving the smoothness of the gas exhaust. In addition, the confluence region is provided, so that gas flows entering from two ends can be collected at the explosion-proof valve, increasing the gas amount at the position of the explosion-proof valve, thereby improving the gas exhaust speed, and improving the gas exhaust effect.

According to an embodiment of this application, the two first support ribs are rotationally symmetrically arranged with respect to the center of the support plate within the first surface.

In this embodiment, the two first support ribs are set to be rotationally symmetrically arranged with respect to the center of the support plate within the first surface, so that the two first support ribs can be made by one mold or process, reducing the mold cost or production cost, thereby reducing the production difficulty and cost of the bottom support.

According to an embodiment of this application, the first support rib includes a first support section and a second support section sequentially connected in the length direction of the support plate; at least part of a side surface of the first support section facing the gas flow channel is formed as the guide inclined surface; and in a direction from the first support section to the second support section, the guide inclined surface extends obliquely toward the other first support rib.

In this embodiment, the first support section and the second support section are provided, and the side surface of the first support section facing the gas flow channel is provided with the guide inclined surface, so that vortices can be formed by the gas flow in the confluence region, thereby accelerating the gas exhaust, thereby effectively reducing the internal pressure of the battery cell, and reducing the probability of thermal runaway in the battery cell.

According to an embodiment of this application, a fillet is provided between the guide inclined surface and an end surface of the first support rib.

In this embodiment, the fillet is provided between the guide inclined surface and the end surface of the first support rib, so that the generation of vortices at an inlet of the gas flow channel can be effectively reduced, the flow rate of the gas flow and the flow smoothness of the gas flow can be improved, and the gas generated inside the battery cell can quickly flow to the explosion-proof valve and be discharged to the outside of the battery cell, thereby effectively reducing the occurrence of thermal runaway in the battery cell.

According to an embodiment of this application, a fillet radius between the guide inclined surface and the end surface of the first support rib is 2.5 mm-5 mm.

In this embodiment, the fillet radius between the guide inclined surface and the end surface of the first support rib is set to be 2.5 mm-5 mm, so that the fillet between the guide inclined surface and the end surface of the first support rib is not excessively large, facilitating the formation of the fillet and reducing the impact on the guide inclined surface. In addition, the fillet between the guide inclined surface and the end surface of the first support rib is not excessively small, facilitating the reduction of vortices, thereby improving the flow rate of the gas flow and the flow smoothness of the gas flow, and improving the gas exhaust effect.

According to an embodiment of this application, the side surface of the first support section facing the gas flow channel further includes a flow guide inclined surface; the flow guide inclined surface is connected to an end of the guide inclined surface facing the second support section; in the direction from the first support section to the second support section, the flow guide inclined surface extends obliquely toward the other side surface of the first support rib facing away from the gas flow channel; and the confluence region is formed between the flow guide inclined surfaces of the two first support ribs.

In this embodiment, the flow guide inclined surface is provided, so that the original flow trajectory of the gas flow can be changed, making movement directions of two gas flows entering the confluence region opposite, and making the two gas flows not collide with each other directly, thereby further facilitating the generation of vortices and accelerating the gas exhaust.

According to an embodiment of this application, an included angle between the flow guide inclined surface and the length direction of the support plate is greater than an included angle between the guide inclined surface and the length direction of the support plate.

In this embodiment, the included angle between the flow guide inclined surface and the length direction of the support plate is set to be greater than the included angle between the guide inclined surface and the length direction of the support plate, so that a range of the confluence region can be limited to be smaller than a range of the guide section, thereby limiting the range of the confluence region to the position of the explosion-proof valve, and improving the gas exhaust effect.

According to an embodiment of this application, the flow guide inclined surface is connected to the guide inclined surface via a circular arc.

In this embodiment, the flow guide inclined surface is set to be connected to the guide inclined surface via the circular arc, so that the generation of vortices at a junction between the flow guide inclined surface and the guide inclined surface can be reduced, thereby increasing the flow rate of the gas flow, further accelerating the generation of vortices, allowing the gas flow to be quickly discharged from the inside of the battery cell, reducing the internal pressure of the battery cell, and reducing the occurrence of thermal runaway in the battery cell.

According to an embodiment of this application, a side surface of the second support section facing the gas flow channel is a plane parallel to the length direction of the support plate.

In this embodiment, the side surface of the second support section facing the gas flow channel is set as the plane parallel to the length direction of the support plate, so that the production convenience of the support frame can be improved, and the production rate of the support frame can be improved. In addition, the size of the gas flow channel can be easily controlled, ensuring the gas exhaust effect.

According to an embodiment of this application, in the width direction of the support plate, a ratio of a width of the second support section to a maximum width of the first support section is 0.25-0.45.

In this embodiment, the ratio of the width of the second support section to the maximum width of the first support section is set to be 0.25-0.45, so that the width of the second support section is not excessively large, ensuring the width of the gas flow channel, and meeting the gas exhaust demand of the battery cell. In addition, the width of the second support section is not excessively small, helping to improve the support effect for the support plate, thereby improving the support strength of the bottom support, and effectively reducing the risk of the bottom support being crushed.

According to an embodiment of this application, a ratio of a projection area of the support frame within the first surface to an area of the first surface is 0.15-0.4.

In this embodiment, the ratio of the projection area of the support frame within the first surface to the area of the first surface is set to be 0.15-0.4. This helps to improve the structural strength of the bottom support and improve its structural stability, thereby effectively preventing the bottom support from being crushed. In addition, this can also limit the flow area of the gas flow channel, so that the flow area of the gas flow channel can meet the gas exhaust demand, allowing the gas generated during the cycling of the battery cell to be discharged in time, and reducing the internal pressure of the battery cell, thereby reducing the probability of thermal runaway in the battery cell, and improving the use reliability and service life of the battery cell.

According to an embodiment of this application, in the thickness direction of the support plate, a height of the support frame is 0.6 mm-5 mm.

In this embodiment, the height of the support frame in the thickness direction of the support plate is set to be 0.6 mm-5 mm, so that the bottom support can not only ensure the smoothness of the gas exhaust of the battery cell, but also reduce the occupied space of the bottom support, thereby increasing the energy density of the battery cell.

According to an embodiment of this application, in the thickness direction of the support plate, the height of the support frame is 0.6 mm-3 mm.

In this embodiment, the height of the support frame in the thickness direction of the support plate is set to be 0.6 mm-3 mm, so that the height of the support frame is not excessively high, helping to increase the energy density of the battery cell. In addition, the height of the support frame is not excessively small, so that the height of the support frame can meet the gas exhaust demand, thereby improving the gas exhaust effect.

According to an embodiment of this application, the battery cell is a lithium iron phosphate battery, and the height of the support frame is 0.6 mm-1 mm; or the battery cell is a ternary polymer lithium battery, and the height of the support frame is 0.6 mm-3 mm.

In this embodiment, when the battery cell is a lithium iron phosphate battery, the height of the support frame is set to be 0.6 mm-1 mm, and when the battery cell is a ternary polymer lithium battery, the height of the support frame is set to be 0.6 mm-3 mm, so that the height of the support frame can be designed according to the type of the battery cell, the bottom support can meet the gas exhaust demand, and the occupied space of the bottom support can also be reduced, increasing the energy density of the battery cell.

According to an embodiment of this application, a thickness of the support plate is 0.4 mm-0.6 mm.

In this embodiment, the thickness of the support plate is set to be 0.4 mm-0.6 mm, so that the support plate can meet the support function of the bottom support for the electrode assembly, and the materials used of the support plate can also be reduced, thereby reducing the production difficulty and production cost of the support plate. In addition, a thickness range of the support plate is set to be 0.4 mm to 0.6 mm, so that the thickness of the bottom support can also be reduced, thereby increasing the energy density of the battery cell.

According to an embodiment of this application, the bottom support is a polypropylene component, or the bottom support is an aluminum component.

In this embodiment, the bottom support is set as a polypropylene component, so that the possibility of the bottom support being corroded by an electrolyte or crushed can be reduced, thereby improving the reliability and service life of the bottom support. In addition, the production cost of the battery cell can also be reduced. The bottom support is set as an aluminum component, so that the support performance and corrosion resistance of the bottom support can be improved, and the weight of the bottom support can also be reduced, thereby reducing the weight of the battery cell, and allowing the battery to be lightweight.

According to a second aspect of this application, a battery includes the battery cell according to the first aspect of this application.

According to the battery of this application, the battery cell of the above first aspect is provided, so that the overall performance of the battery is improved.

According to a third aspect of this application, an electric device includes the battery according to the second aspect of this application.

According to the electric device of this application, the battery according to the above second aspect is provided, so that the overall performance of the electric device is improved.

For additional aspects and advantages of this application, some will be given in the following description, and some will become apparent in the following description or will be understood in the practice of this application.

### BRIEF DESCRIPTION OF DRAWINGS

FIG. 1 is a schematic diagram of a vehicle according to an embodiment of this application;
FIG. 2 is a schematic diagram of a battery according to an embodiment of this application;
FIG. 3 is an exploded view of a battery according to an embodiment of this application;
FIG. 4 is an exploded view of a battery cell according to an embodiment of this application;
FIG. 5 is a schematic diagram of a bottom support according to an embodiment of this application;
FIG. 6 is a schematic diagram shown in FIG. 5 from another perspective;
FIG. 7 is a schematic diagram of the bottom support shown in FIG. 5 from still another perspective;
FIG. 8 is a schematic diagram of the bottom support shown in FIG. 5 from yet still another perspective;
FIG. 9 is a schematic diagram of a bottom support according to another embodiment of this application;
FIG. 10 is a schematic diagram of the bottom support shown in FIG. 9 from another perspective;
FIG. 11 is a schematic diagram of the bottom support shown in FIG. 9 from still another perspective; and
FIG. 12 is a schematic diagram of the bottom support shown in FIG. 9 from yet still another perspective.

Reference signs in the drawings:
vehicle 1;
battery 1000;
battery cell 100;
bottom support 10; support plate 11; support frame 12; first support rib 121; first support section 1211; second support section 1212; guide inclined surface 1213; flow guide inclined surface 1214; second support rib 122; gas flow channel 13; guide section 131; confluence region 132;
housing 20; accommodating cavity 21;
electrode assembly 30;
end cover 40; adapting piece 50;
box 200; main box 201; cover plate 202;
controller 2000; and motor 3000.

### DESCRIPTION OF EMBODIMENTS

The embodiments of the technical solutions of this application will be described in detail below with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein have the same meanings as commonly understood by those of ordinary skill in the art to which this application belongs; the terms used herein are only for the purpose of describing specific embodiments and are not intended to limit this application; and the terms "include", "comprise", "have", and any other variations thereof in the specification, claims and brief description of drawings of this application are intended to cover non-exclusive inclusions.

In the description of the embodiments of this application, the technical terms "first", "second", and the like are only used to distinguish different objects, and should not be understood as indicating or implying relative importance or implicitly indicating the number, specific order or primary and secondary relationship of the indicated technical features. In the description of the embodiments of this application, the meaning of "a plurality of" is two or more, unless otherwise specifically defined.

Reference to "embodiment" in the specification means that specific features, structures, or characteristics described with reference to an embodiment may be included in at least one embodiment of this application. The word "embodiment" appearing in various places in this specification does not necessarily refer to the same embodiment or an independent or alternative embodiment that is exclusive of other embodiments. Those skilled in the art explicitly and implicitly understand that some embodiments described herein may be combined with other embodiments.

In the description of the embodiments of this application, the term "and/or" is merely an association describing associated objects, indicating that three relationships can exist. For example, A and/or B may indicate the following three cases: presence of only A, presence of both A and B, and presence of only B. In addition, the character "/" in this specification generally indicates an "or" relationship between the contextually associated objects.

In the description of the embodiments of this application, the term "a plurality of" refers to two or more (including two).

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "axial", "radial", "circumferential", and the like are based on the orientations or positional relationships as shown in the accompanying drawings. These terms are merely for ease and brevity of description of these embodiments of this application rather than indicating or implying that the means or components mentioned must have specific orientations or must be constructed or manipulated according to specific orientations, and therefore shall not be construed as any limitations on these embodiments of this application.

In the description of the embodiments of this application, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. For those of ordinary skill in the art, the specific meanings of the above terms in the embodiments of this application can be understood according to specific situations.

Currently, from the perspective of market development, the application of traction batteries is becoming more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

At present, during the production of battery cells, ultra-thin separators are introduced, and the ultra-thin separators used decrease the volume of the electrode assembly, decrease the group margin, and increase the energy density, thereby providing room for increasing the capacity of the electrode assembly. As the capacity of the electrode assembly increases, the amount of gas generated in the battery cell also increases accordingly, and the probability of thermal runaway in the battery cell and the risk of cracking of the housing weld caused by excessive pressure also increase accordingly. Moreover, currently, to prevent the released gas and particles from entering the passenger compartment, the explosion-proof valve is disposed at the bottom of the battery cell. However, this solution tends to cause unsmooth gas exhaust, making it difficult for the gas to flow to the explosion-proof valve and be discharged in a timely manner, which further increases the probability of thermal runaway in the battery cell.

To solve the problems of thermal runaway and cracking of the housing weld caused by the incapability of smoothly discharging the gas due to the provision of the explosion-proof valve at the bottom of the battery cell during the cycling of the battery cell, it has been found through research that a gas exhaust channel can be added at the bottom of the battery cell to ensure the gas exhaust space, so that the gas can be smoothly discharged, thereby reducing the internal pressure of the battery cell and reducing the occurrence of thermal runaway.

Based on the above considerations, to solve the problems of thermal runaway and cracking of the housing weld caused by the incapability of smoothly discharging the gas due to the provision of the explosion-proof valve at the bottom of the battery cell during the cycling of the battery cell, a battery cell is designed. A bottom support is provided, a plurality of first support ribs of the bottom support are respectively arranged on at least one side edge of a support plate in a width direction, and the first support ribs, the support plate, and a bottom wall of the accommodating cavity jointly define a gas flow channel. In this way, the gas exhaust space can be increased, and the direction of the gas can be guided, ensuring that the gas is quickly discharged to a position of the explosion-proof valve of the battery cell, thereby making the gas generated in the battery cell have a large discharge space, allowing the gas flow during the cycling of the battery cell to be quickly discharged, quickly reducing the internal pressure of the battery cell, and reducing the probability of thermal runaway.

During the cycling of the battery cell, a large amount of gas is generated inside the battery cell. The gas can enter the gas flow channel from two ends of the first support rib in a length direction, and then is guided to the explosion-proof valve through the gas flow channel and discharged. Therefore, the bottom support of this application can improve the gas exhaust inside the battery cell and reduce the internal pressure of the battery cell, thereby reducing the probability of thermal runaway in the battery cell and the risk of cracking of the housing weld caused by excessive pressure.

The battery cell disclosed in the embodiments of this application can be applied to electric apparatuses using batteries as power supplies or various energy storage systems using batteries as energy storage elements. The electric apparatuses may be but are not limited to mobile phones, tablets, notebook computers, electric toys, electric tools, electric bicycles, electric vehicles, ships, spacecraft, and the like. The electric toys may include fixed or mobile electric toys, such as game consoles, electric toy cars, electric toy ships, and electric toy airplanes. The spacecraft may include airplanes, rockets, space shuttles, spaceships, and the like.

For ease of description, an electric apparatus according to an embodiment of this application being a vehicle 1 is used as an example for description of the following embodiments.

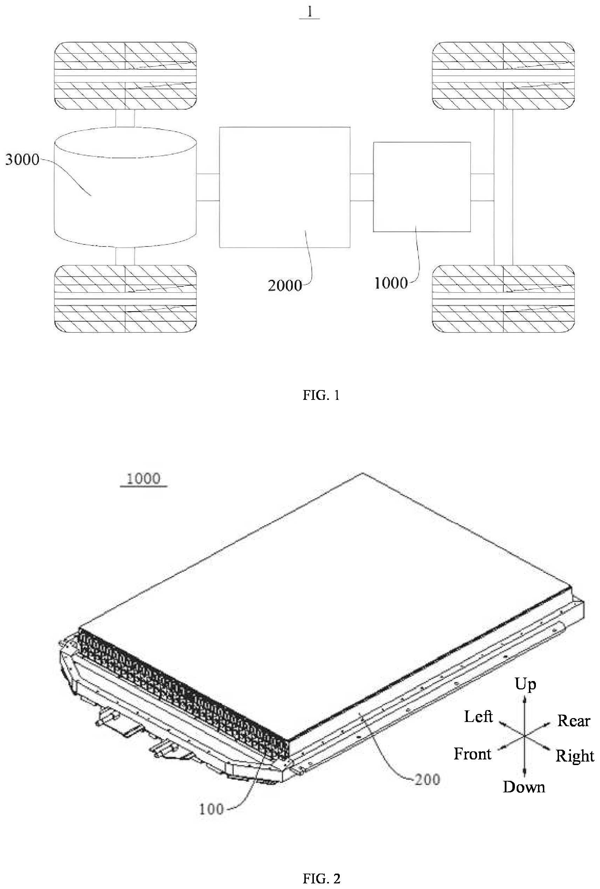

Referring to FIG. 1, FIG. 1 is a schematic diagram of a vehicle 1 according to some embodiments of this application. The vehicle 1 may be a fuel vehicle, a gas vehicle, or a new energy vehicle. The new energy vehicle may be a battery electric vehicle, a hybrid electric vehicle, an extended-range electric vehicle, or the like. A battery 1000 is provided inside the vehicle 1, and the battery 1000 may be disposed at the bottom, head, or tail of the vehicle 1. The battery 1000 may be configured to supply power to the vehicle 1. For example, the battery 1000 may serve as an operating power supply of the vehicle 1. The vehicle 1 may further include a controller 2000 and a motor 3000. The controller 2000 is configured to control the battery 1000 to supply power to the motor 3000, for example, to satisfy power needs of start, navigation, and driving of the vehicle.

In some embodiments of this application, the battery 1000 can not only serve as an operating power supply of the vehicle 1, but also as a driving power supply of the vehicle 1, replacing or partially replacing fuel or natural gas to provide driving power to the vehicle 1.

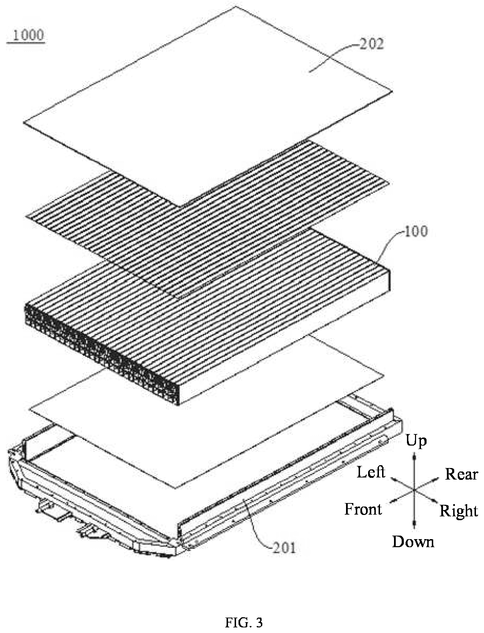

Referring to FIG. 2 and FIG. 3, FIG. 2 is a schematic diagram of a battery 1000 according to some embodiments of this application, and FIG. 3 is an exploded view of a battery 1000 according to some embodiments of this application. The battery 1000 includes a box 200 and a battery cell 100. The box 200 has a cavity, and the battery cell 100 is accommodated in the cavity of the box 200. The box 200 is configured to provide an accommodating space for the battery cell 100, and the box 200 may use various structures. According to an embodiment of this application, the box 200 may include a first portion (for example, the main box 201 described below) and a second portion (for example, the cover plate 202 described below). The first portion and the second portion fit with each other, so that the first portion and the second portion jointly define an accommodating space for accommodating the battery cell 100. The second portion may be a hollow structure with an opening at one end. The first portion may be a platelike structure. The first portion is engaged with an opening side of the second portion, so that the first portion and the second portion jointly define the accommodating space. The first portion and the second portion may alternatively each be a hollow structure with an opening at one side. The opening side of the first portion is engaged with the opening side of the second portion. Certainly, the box 200 formed by the first portion and the second portion may be in various shapes, such as a cylinder and a cuboid.

In the battery 1000, a plurality of battery cells 100 may be provided. The plurality of battery cells 100 may be connected in series, parallel, or series-parallel. Being connected in series-parallel means a combination of series and parallel connections of the plurality of battery cells 100. The plurality of battery cells 100 may be directly connected in series, parallel, or series-parallel, and then an entirety formed by the plurality of battery cells 100 is accommodated in the box 200; or certainly, the battery 1000 may be formed by a plurality of battery cells 100 being connected in series, parallel, or series-parallel first to form a battery module and then a plurality of battery modules being connected in series, parallel, or series-parallel to form an entirety which is accommodated in the box 200. The battery 1000 may further include other structures. For example, the battery 1000 may further include a busbar component configured to implement electrical connection between the plurality of battery cells 100.

Each battery cell 100 may be a secondary battery or a primary battery or may be a lithium-sulfur battery, a sodium-ion battery, or a magnesium-ion battery, but is not limited thereto. The battery cell 100 may be in a cylindrical shape, a flat shape, a cuboid shape, or another shape.

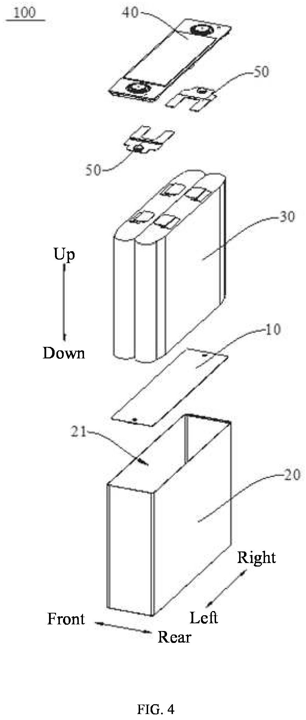

Referring to FIG. 4, FIG. 4 is a schematic diagram of a battery cell 100 according to some embodiments of this application. The battery cell 100 refers to the smallest unit constituting the battery 1000. As shown in FIG. 4, the battery cell 100 includes an end cover 40, a housing 20, an electrode assembly 30, an adapting piece 50, a first insulating member, a bottom support 10, and other functional components.

The end cover 40 refers to a component that covers an opening of the housing 20 to isolate the internal environment of the battery cell 100 from the external environment. Without limitation, the shape of the end cover 40 can be adapted to the shape of the housing 20 to cooperate with the housing 20. Optionally, the end cover 40 may be made of a material with a certain hardness and strength (such as aluminum alloy), so that the end cover 40 is not prone to deformation when squeezed or collided, allowing the battery cell 100 to have higher structural strength and improved safety performance. Functional components such as an output terminal may be provided on the end cover 40. The output terminal may be configured to be electrically connected to the electrode assembly 30 for outputting or inputting electrical energy of the battery cell 100. According to an embodiment of this application, the end cover 40 may be further provided with an explosion-proof valve for releasing internal pressure when the internal pressure or temperature of the battery cell 100 reaches a threshold. The end cover 40 may also be made of various materials including but not limited to copper, iron, aluminum, stainless steel, aluminum alloy, plastic, and the like. According to an embodiment of this application, the first insulating member and the adapting piece 50 may be further provided on an inner side of the end cover 40. The first insulating member may be configured to isolate electrical connection components in the housing 20 from the end cover 40 to reduce the risk of short circuit. The adapting piece 50 is connected to a tab for current transmission. Exemplarily, the first insulating member may be made of plastic, rubber, or the like.

The housing 20 is an assembly configured to cooperate with the end cover 40 to form the internal environment of the battery cell 100, where the formed internal environment can be used for accommodating the electrode assembly 30 and other components. The housing 20 and the end cover 40 may be independent components. An opening may be provided on the housing 20. The end cover 40 covers the opening to form the internal environment of the battery cell 100. Without limitation, the end cover 40 and the housing 20 may alternatively be integrated. Specifically, the end cover 40 and the housing 20 may first form a common connection surface before other components enter the housing. When the inside of the housing 20 needs to be sealed, the end cover 40 covers the housing 20. The housing 20 may be in various shapes and sizes, such as a cuboid shape, a cylindrical shape, and a hexagonal prism shape. Specifically, the shape of the housing 20 can be determined according to the specific shape and size of the electrode assembly 30. The housing 20 may be made of various materials including but not limited to copper, iron, aluminum, stainless steel, aluminum alloy, plastic, and the like.

The electrode assembly 30 is a component in the battery cell 100 where electrochemical reactions occur. The housing 20 may be internally provided with one or more electrode assemblies 30. The electrode assembly 30 is mainly formed by winding or stacking a positive electrode plate and a negative electrode plate, and a separator is typically provided between the positive electrode plate and the negative electrode plate. Parts of the positive electrode plate and the negative electrode plate provided with active materials constitute a body portion of the electrode assembly 30, and parts of the positive electrode plate and the negative electrode plate not provided with active materials each constitute a tab. A positive electrode tab and a negative electrode tab can be jointly located at one end of the body portion or respectively located at two ends of the body portion. During the charging and discharging process of the battery 1000, a positive electrode active material and a negative electrode active material react with an electrolyte, and the tabs are connected to electrode terminals to form a current loop.

The positive electrode plate includes a positive electrode current collector and a positive electrode active material layer. The positive electrode active material layer is applied to a surface of the positive electrode current collector. The positive electrode current collector not coated with the positive electrode active material layer protrudes from the positive electrode current collector coated with the positive electrode active material layer, and the positive electrode current collector not coated with the positive electrode active material layer serves as the positive electrode tab. Taking a lithium-ion battery as an example, the material of the positive electrode current collector may be aluminum, and the positive electrode active material may be lithium cobaltate, lithium iron phosphate, ternary lithium, lithium manganate, or the like.

The negative electrode plate includes a negative current collector and a negative electrode active material layer. The negative electrode active material layer is applied to a surface of the negative current collector. The negative current collector not coated with the negative electrode active material layer protrudes from the negative current collector coated with the negative electrode active material layer, and the negative current collector not coated with the negative electrode active material layer serves as the negative electrode tab. The material of the negative current collector may be copper, and the negative electrode active material may be carbon or silicon. To allow a large current to pass through without any fusing, a plurality of positive electrode tabs are provided and stacked together, and a plurality of negative electrode tabs are provided and stacked together.

The material of the separator may be PP (polypropylene, polypropylene), PE (polyethylene, polyethylene), or the like.

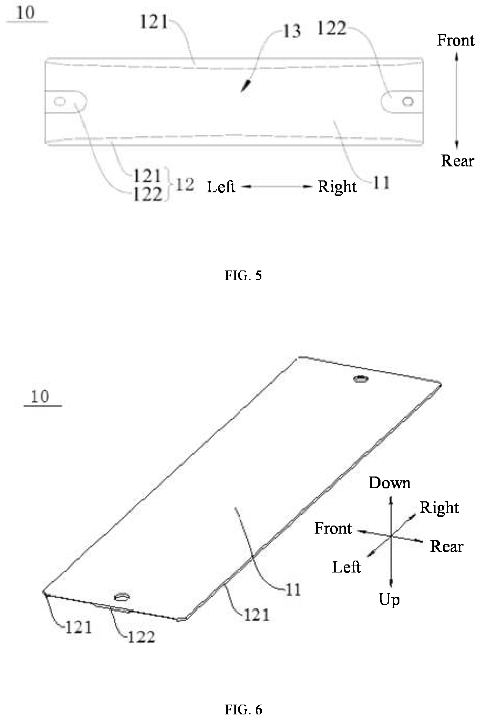

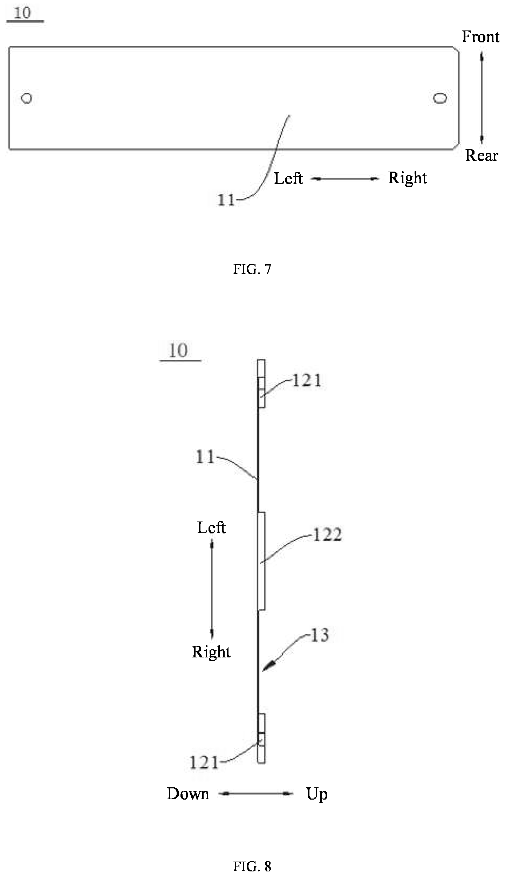

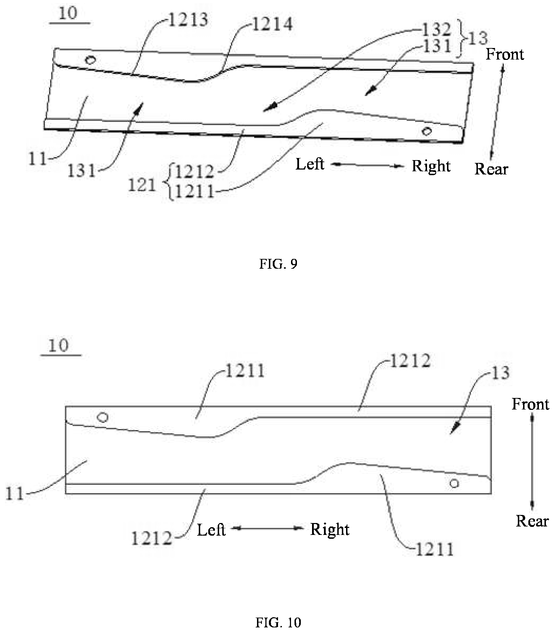

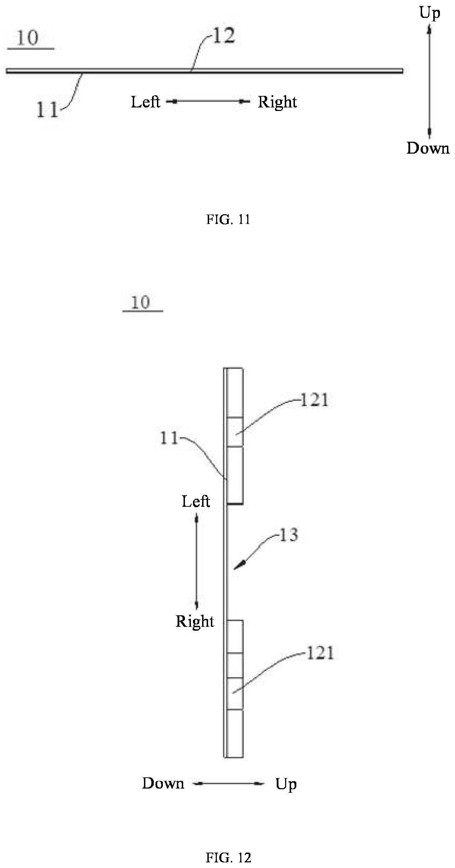

A battery cell 100 according to an embodiment of a first aspect of this application will be described below with reference to FIG. 4 to FIG. 11. FIG. 4 is an exploded view of a battery cell 100 according to some embodiments of this application. FIG. 5 is a schematic diagram of a bottom support 10 according to some embodiments of this application. FIG. 6 is a schematic diagram of the bottom support 10 shown in FIG. 5 from another perspective. FIG. 6 is a schematic diagram of the bottom support 10 shown in FIG. 5 from still another perspective. FIG. 8 is a schematic diagram of the bottom support 10 shown in FIG. 5 from yet still another perspective. FIG. 9 is a schematic diagram of a bottom support 10 according to another embodiment of this application. FIG. 10 is a schematic diagram of the bottom support 10 shown in FIG. 9 from another perspective. FIG. 11 is a schematic diagram of the bottom support 10 shown in FIG. 9 from still another perspective. FIG. 12 is a schematic diagram of the bottom support 10 shown in FIG. 9 from yet still another perspective.

An embodiment of this application provides a battery cell 100. As shown in FIG. 4 and FIG. 5, the battery cell 100 includes a housing 20, a bottom support 10, and an electrode assembly 30. The housing 20 defines an accommodating cavity 21. An explosion-proof valve is disposed at a bottom of the housing 20. The bottom support 10 is disposed on a bottom wall of the accommodating cavity 21. The bottom support 10 includes a support plate 11 and a support frame 12. A side surface of the support plate 11 facing a bottom wall of the accommodating cavity 21 is a first surface. The support frame 12 includes at least one first support rib 121. The first support rib 121 is disposed on the first surface and extends along a length direction of the support plate 11 (for example, a direction from left to right as shown in FIG. 5). The at least one first support rib 121 is disposed on the first surface and respectively arranged on at least one side edge of the support plate 11 in a width direction (for example, a direction from front to rear as shown in FIG. 5). A gas flow channel 13 in communication with the explosion-proof valve is defined between the first support rib 121, the first surface, and the bottom wall of the accommodating cavity 21. The electrode assembly 30 is disposed in the accommodating cavity 21 and supported on a second surface of the support plate 11. The first surface and the second surface are disposed opposite each other in a thickness direction of the support plate 11.

Specifically, the housing 20 is mainly configured to isolate the inside of the battery cell 100 from the outside, effectively preventing the inside of the battery cell 100 from communicating with the outside, thereby improving the reliability of the battery cell 100. The bottom support 10 and the bottom wall of the accommodating cavity 21 jointly define the gas flow channel 13, which can guide the gas in the accommodating cavity 21 to the explosion-proof valve through the gas flow channel 13 and discharge the gas through the explosion-proof valve, thereby effectively reducing the internal pressure of the battery cell 100, and reducing the probability of thermal runaway in the battery cell 100.

The support plate 11 may be a horizontally arranged rectangular plate. The second surface of the support plate 11 is connected to the electrode assembly 30. The first surface of the support plate 11 abuts against the bottom wall of the accommodating cavity 21 through the support frame 12. In this way, the support plate 11 is in surface contact with the electrode assembly 30, which can increase a contact area between the bottom support 10 and the electrode assembly 30, thereby effectively preventing damage to the electrode assembly 30 or the bottom support 10 caused by the swelling and extrusion of the electrode assembly 30 on the bottom support 10, and improving the reliability of the battery cell 100.

The first support rib 121 may be formed as a strip-shaped protrusion. One side of the first support rib 121 is connected to the support plate 11, and the other side of the first support rib 121 extends toward the bottom wall of the accommodating cavity 21 and abuts against the bottom wall of the accommodating cavity 21. The first support rib 121 mainly plays a supporting role, which can form a certain gap between the support plate 11 and the bottom wall of the accommodating cavity 21, thereby defining the gas flow channel 13 to achieve smooth gas exhaust.

The support frame 12 includes at least one first support rib 121. For example, one, two, three, or more first support ribs 121 may be provided. At least one first support rib 121 is disposed on the first surface and respectively arranged on at least one side edge of the support plate 11 in the width direction. That is, the first support rib 121 may be arranged at one side edge of the support plate 11 or at two side edges of the support plate 11. In this way, the first support rib 121 can avoid the position of the explosion-proof valve, so that the gas flow channel 13 is in communication with the explosion-proof valve, thereby allowing the gas generated in the battery cell 100 to flow through the gas flow channel 13 to the explosion-proof valve and be discharged through the explosion-proof valve. In addition, the first support rib 121 is arranged at the edge of the support plate 11, which can also increase a flow area of the gas flow channel 13, thereby increasing the gas exhaust space of the bottom support 10 and improving the gas exhaust effect. During the cycling of the battery cell 100, a large amount of gas is generated inside the battery cell 100. The gas can enter the gas flow channel 13 from two ends of the first support rib 121 in a length direction, and then is guided to the explosion-proof valve through the gas flow channel 13 and discharged. Therefore, the bottom support 10 of this application can improve the gas exhaust inside the battery cell 100 and reduce the internal pressure of the battery cell 100, thereby reducing the probability of thermal runaway in the battery cell 100 and the risk of cracking of the weld of the housing 20 caused by excessive pressure.

According to the battery cell 100 of this embodiment of this application, the gas flow channel 13 jointly defined by the bottom support 10 and the bottom wall of the accommodating cavity 21 is provided, so that a large discharge space may be formed inside the battery cell 100, thereby allowing a large amount of gas generated during the cycling of the battery cell 100 to be guided to the explosion-proof valve through the gas flow channel 13 and discharged through the explosion-proof valve, thereby improving the gas exhaust effect of the battery cell 100, effectively reducing the internal pressure of the battery cell 100, and reducing the probability of thermal runaway in the battery cell 100 and the risk of cracking of the weld of the housing 20 caused by excessive pressure.

According to an embodiment of this application, two first support ribs 121 are provided, and the two first support ribs 121 are respectively arranged at two side edges of the support plate 11 in the width direction. The two first support ribs 121 are at least partially flush with the two side edges of the support plate 11 in the width direction respectively.

That is, the two first support ribs 121 may be at least partially flush with the two side edges of the support plate 11 in the width direction respectively, or entirely flush with the two side edges of the support plate 11 in the width direction.

In this embodiment of this application, the two first support ribs 121 are respectively arranged at the two side edges of the support plate 11 in the width direction, and the two first support ribs 121 are at least partially flush with the two side edges of the support plate 11 in the width direction respectively. In this way, the bottom support 10 in the embodiment of this application can reduce a gap generated between the first support rib 121 and the edge of the support plate 11, thereby further reducing the probability of formation of a flow stagnation region between the first support rib 121 and the edge of the support plate 11, effectively reducing the swelling caused by the accumulation of the gas flow at a junction between the first support rib 121 and the support plate 11, and allowing a large amount of gas to enter the gas flow channel 13 from two ends of the gas flow channel 13, thereby improving the gas exhaust effect. In addition, a cross-sectional area of the gas flow channel 13 can also be increased, thereby further increasing the gas exhaust space of the bottom support 10 and improving the gas exhaust effect.

In this embodiment, the two first support ribs 121 are provided, and the two first support ribs 121 are at least partially flush with the two side edges of the support plate 11 in the width direction respectively. This can effectively reduce the probability of formation of the flow stagnation region between the first support rib 121 and the edge of the support plate 11, effectively reduce the swelling caused by the accumulation of the gas flow at the junction between the first support rib 121 and the support plate 11, and allow a large amount of gas to enter the gas flow channel 13 from two ends of the gas flow channel 13, thereby improving the gas exhaust effect. In addition, this can also increase the cross-sectional area of the gas flow channel 13, thereby further increasing the gas exhaust space of the bottom support 10 and improving the gas exhaust effect.

According to an embodiment of this application, as shown in FIG. 5, the first support rib 121 extends from one end to the other end in the length direction of the support plate 11, and in a direction from the two ends to the middle in the length direction of the support plate 11, a width of the first support rib 121 in the width direction of the support plate 11 gradually increases.

It can be understood that, in the length direction of the support plate 11, the width of the first support rib 121 first increases and then decreases. In this way, a width of a middle position of the first support rib 121 is large, so that the structural strength of the middle of the support plate 11 can be improved, effectively increasing the support effect of the bottom support 10, thereby effectively reducing the risk of the bottom support 10 being crushed and ensuring the smoothness of the gas exhaust.

In addition, the gas flow channel 13 is defined between the two first support ribs 121. In this way, in the direction from the two sides to the middle in the length direction of the support plate 11, a cross-sectional area of the gas flow channel 13 gradually decreases, that is, the gas flow channel 13 is narrowed, so that a flow rate of the gas flow in the gas flow channel 13 can also be increased, improving the gas exhaust effect, thereby reducing the probability of thermal runaway in the battery cell 100 and the risk of cracking of the weld of the housing 20 caused by excessive pressure.

In this embodiment, the width of the first support rib 121 is set to gradually increase in the direction from the two ends to the middle in the length direction of the support plate 11, so that the structural strength of the middle of the support plate 11 can be improved, effectively increasing the support effect of the bottom support 10, thereby effectively reducing the risk of the bottom support 10 being crushed, and ensuring the smoothness of the gas exhaust. In addition, the flow rate of the gas flow in the gas flow channel 13 can also be increased, improving the gas exhaust effect, thereby reducing the probability of thermal runaway in the battery cell 100 and the risk of cracking of the weld of the housing 20 caused by excessive pressure.

According to an embodiment of this application, as shown in FIG. 5, in a direction from one end to the other end in the length direction of the support plate 11, a side edge of the first support rib 121 facing the gas flow channel 13 extends along an arc protruding toward the gas flow channel 13.

The side edge of the first support rib 121 facing the gas flow channel 13 extends along the arc, and an arc-shaped edge can play a flow guide role, so that the generation of vortices at a surface position of the first support rib 121 can be reduced, and the occurrence of boundary layer separation can be reduced. This can increase the flow rate of the gas flow, allowing the gas flow entering the gas flow channel 13 to be quickly guided to the position of the explosion-proof valve, thereby quickly reducing the internal pressure of the battery cell 100, and reducing the probability of thermal runaway in the battery cell 100 and the risk of cracking of the weld of the housing 20 caused by excessive pressure.

In this embodiment, the side edge of the first support rib 121 facing the gas flow channel 13 extends along the arc protruding toward the gas flow channel 13, so that the generation of vortices can be reduced, and the occurrence of boundary layer separation can be reduced. This can increase the flow rate of the gas flow, allowing the gas flow entering the gas flow channel 13 to be quickly guided to the position of the explosion-proof valve, thereby quickly reducing the internal pressure of the battery cell 100, and reducing the probability of thermal runaway in the battery cell 100 and the risk of cracking of the weld of the housing 20 caused by excessive pressure.

According to an embodiment of this application, as shown in FIG. 5, the side edge of the first support rib 121 extends along a circular arc, and a diameter of the circular arc is 130 mm-180 mm.

The circular arc has a simple structure and good smoothness, which facilitates the production of the first support rib 121 and the guidance of the gas flow, thereby allowing the side edge of the first support rib 121 to extend along the circular arc, and further improving the gas exhaust effect of the gas flow.

For example, the diameter of the circular arc may be 130 mm, 140 mm, 150 mm, 160 mm, 170 mm, or 180 mm.

Preferably, the diameter of the circular arc is 150 mm.

In this embodiment, the diameter of the circular arc is set to 130 mm-180 mm, so that the curvature of the first support rib 121 is not excessively large, facilitating the smooth flow of the gas flow, reducing the resistance in the flow process, and improving the gas exhaust effect of the gas flow. In addition, the curvature of the first support rib 121 is not excessively small, helping to reduce the generation of flow boundary layer vortices, thereby increasing the flow rate, and improving the gas exhaust effect.

According to an embodiment of this application, as shown in FIG. 5, in the width direction of the support plate 11, widths of two ends of the first support rib 121 in the length direction of the support plate 11 are 8 mm-11 mm.

For example, in the width direction of the support plate 11, the widths of the two ends of the first support rib 121 in the length direction of the support plate 11 may be 8 mm, 9 mm, 10 mm, or 11 mm.

In this embodiment, the widths of the two ends of the first support rib 121 in the length direction of the support plate 11 are 8 mm-11 mm. This allows structural strength and support performance of the first support rib 121 to meet the support performance required by the bottom support 10, reducing the risk of the bottom support 10 being crushed. In addition, this can also ensure the flow area of the gas flow channel 13, thereby ensuring the gas exhaust space and improving the gas exhaust effect.

According to an embodiment of this application, as shown in FIG. 5, in the width direction of the support plate 11, a maximum width of the first support rib 121 is 12 mm-16 mm.

For example, in the width direction of the support plate 11, the maximum width of the first support rib 121 may be 12 mm, 13 mm, 14 mm, 15 mm, or 16 mm.

Preferably, in the width direction of the support plate 11, the maximum width of the first support rib 121 is 14 mm.

In this embodiment, the maximum width of the first support rib 121 is set to 12 mm-16 mm, so that the structural strength of the bottom support 10 can be increased, reducing the probability of deformation of the bottom support 10 and the risk of the bottom support 10 being crushed, thereby reducing the probability of thermal runaway in the battery cell 100 caused by an unsmooth gas exhaust path.

According to an embodiment of this application, as shown in FIG. 5, the support frame 12 further includes two second support ribs 122. The second support ribs 122 extend along the length direction of the support plate 11 and are disposed between the two first support ribs 121. The two second support ribs 122 are respectively arranged at two ends of the support plate 11 in the length direction.

In this embodiment, with the second support ribs 122 provided, support points of the support frame 12 for the support plate 11 can be increased, so that the structural strength and support strength of the support frame 12 can be further improved, further reducing the risk of the bottom support 10 being crushed, thereby reducing the probability of thermal runaway in the battery cell 100 caused by the unsmooth gas exhaust path.

According to an embodiment of this application, as shown in FIG. 5, in the length direction of the support plate 11, one end of the second support rib 122 is flush with an end edge of the support plate 11 in the length direction.

In this embodiment, in the length direction of the support plate 11, one end of the second support rib 122 is set to be flush with the end edge of the support plate 11 in the length direction, so that the structural strength at two ends of the bottom support 10 in a length direction can be improved. This can effectively prevent a gas flow inlet from being crushed, allowing the gas flow to smoothly enter the gas flow channel 13 and be guided along the gas flow channel 13 to the explosion-proof valve, and allowing the gas to be discharged to the outside of the battery cell 100, thereby reducing the occurrence of thermal runaway in the battery cell 100. In addition, this can also effectively prevent the formation of a flow stagnation region between the second support rib 122 and the support plate 11, ensuring the smoothness of the gas flow, thereby improving the gas exhaust effect.

According to an embodiment of this application, as shown in FIG. 5, in the length direction of the support plate 11, a length of the second support rib 122 is 20 mm-30 mm.

For example, in the length direction of the support plate 11, the length of the second support rib 122 may be 20 mm, 22 mm, 24 mm, 26 mm, 28 mm, or 30 mm.

In this embodiment, the length of the second support rib 122 is set to be 20 mm-30 mm, so that the length of the second support rib 122 is not excessively large. This helps to increase the flow area of the gas flow channel 13, increasing the flow space of the gas flow, and improving the gas exhaust effect of the bottom support 10. In addition, the length of the second support rib 122 is not excessively small, allowing the support strength of the support frame 12 to meet the structural strength required by the bottom support 10, thereby reducing the risk of the bottom support 10 being crushed, and improving the use reliability and service life of the battery cell 100.

According to an embodiment of this application, as shown in FIG. 5, in the length direction of the support plate 11, a ratio of the length of the second support rib 122 to a length of the support plate 11 is 0.07-0.12.

For example, in the length direction of the support plate 11, the ratio of the length of the second support rib 122 to the length of the support plate 11 may be 0.07, 0.08, 0.09, 0.1, 0.11, or 0.12.

In this embodiment, the ratio of the length of the second support rib 122 to the length of the support plate 11 is 0.07-0.12. This can effectively increase the flow area of the gas flow channel 13, increasing the gas exhaust space, and making the gas exhaust path smoother, thereby accelerating the gas exhaust, reducing the internal pressure of the battery cell 100, and improving the use reliability and service life of the battery cell 100. In addition, this also allows the second support rib 122 to meet the support strength required by the bottom support 10, effectively reducing the risk of the bottom support 10 being crushed, reducing the probability of gas exhaust failure of the bottom support 10, and improving the gas exhaust effect, thereby reducing the probability of thermal runaway in the battery cell 100, and improving the use reliability and service life of the battery cell 100.

According to an embodiment of this application, as shown in FIG. 5, an end surface of the other end of the second support rib 122 is an arc surface protruding in a direction facing away from the end edge of the support plate 11.

Specifically, the other end of the second support rib 122 refers to an end facing the middle of the support plate 11, where the arc surface can play a guiding role for the gas, so that the probability of vortex generation can be effectively reduced, increasing the flow rate of the gas flow, and allowing the gas generated in the battery cell 100 to quickly flow to the explosion-proof valve and be discharged to the outside of the battery cell 100, thereby effectively reducing the probability of thermal runaway in the battery cell 100.

In this embodiment, the end surface of the other end of the second support rib 122 is set as the arc surface protruding in the direction facing away from the end edge of the support plate 11, so that the probability of vortex generation can be effectively reduced, increasing the flow rate of the gas flow, and allowing the gas generated in the battery cell 100 to quickly flow to the explosion-proof valve and be discharged to the outside of the battery cell 100, thereby effectively reducing the occurrence of thermal runaway in the battery cell 100.

According to an embodiment of this application, as shown in FIG. 9, the gas flow channel 13 includes a guide section 131 and a confluence region 132. Two guide sections 131 are provided and respectively connected to two sides of the confluence region 132 in the length direction of the support plate 11 (for example, a direction from left to right as shown in FIG. 9). At least one side wall of the guide section 131 in the width direction of the support plate 11 (for example, a direction from front to rear as shown in FIG. 9) is provided with a guide inclined surface 1213. In a direction from the guide section 131 to the confluence region 132, the guide inclined surfaces 1213 of the two guide sections 131 respectively extend obliquely toward two sides of the confluence region 132 in the width direction of the support plate 11.

Specifically, the guide section 131 mainly plays a guiding role for the gas flow, guiding the gas to flow smoothly and making the overall flow more orderly. The confluence region 132 is mainly used for converging the gas flow, making the gas flow be gathered at the explosion-proof valve and then discharged through the explosion-proof valve. The explosion-proof valve is disposed on a bottom wall of the housing 20 of the battery cell 100 and arranged corresponding to the confluence region 132, helping to improve the gas exhaust effect of the gas flow.

It can be understood that the guide section 131 may be provided with the guide inclined surface 1213 on one side of the support plate 11 in the width direction or may be provided with the guide inclined surface 1213 on two sides of the support plate 11 in the width direction. The guide inclined surface 1213 can limit a movement direction of the gas flow, making the overall flow more orderly, helping to achieve directional flowing of the gas.

In this embodiment, the guide section 131 is provided, so that the gas can be guided to flow smoothly, making the overall flow more orderly, helping to achieve directional flowing of the gas, thereby improving the smoothness of the gas exhaust. In addition, the confluence region 132 is provided, so that the gas flows entering from two ends can be collected at the explosion-proof valve, increasing the gas amount at the position of the explosion-proof valve, thereby improving the gas exhaust speed, and improving the gas exhaust effect.

According to an embodiment of this application, as shown in FIG. 9, the two first support ribs 121 are rotationally symmetrically arranged with respect to the center of the support plate 11 within the first surface.

It can be understood that one support rib can coincide with the other support rib after rotating by 180° around the center of the support plate 11 within the first surface. That is, the two first support ribs 121 have the same shape and size, so that the two first support ribs 121 can be made by one mold or process, thereby reducing the mold cost or production cost, thereby reducing the production difficulty and cost of the bottom support 10.

In this embodiment, the two first support ribs 121 are set to be rotationally symmetrically arranged with respect to the center of the support plate 11 within the first surface, so that the two first support ribs 121 can be made by one mold or process, reducing the mold cost or production cost, thereby reducing the production difficulty and cost of the bottom support 10.

According to an embodiment of this application, as shown in FIG. 9, the first support rib 121 includes a first support section 1211 and a second support section 1212 sequentially connected in the length direction of the support plate 11. At least part of a side surface of the first support section 1211 facing the gas flow channel 13 is formed as the guide inclined surface 1213. In a direction from the first support section 1211 to the second support section 1212, the guide inclined surface 1213 extends obliquely toward the other first support rib 121.

It can be understood that the side surface of the first support section 1211 facing the gas flow channel 13 can be partially formed as the guide inclined surface 1213 or entirely formed as the guide inclined surface 1213. The guide inclined surface 1213 extends obliquely from the edge of the support plate 11 in the length direction to the center position of the support plate 11, helping to guide the gas flow from the inlet of the gas flow channel 13 to the explosion-proof valve, thereby achieving directional flowing of the gas flow and improving the smoothness of the gas exhaust.

In addition, the two first support ribs 121 are symmetrically arranged with respect to the center, so that inclination directions and inclination angles of the two guide inclined surfaces 1213 in the length direction of the support plate 11 are the same. In this way, flow directions of gas flows inside two gas guide sections are opposite. In addition, since the confluence region 132 is formed between the two gas guide sections, the two gas flows flow to the confluence region 132 in a staggered manner and form vortices in the confluence region 132, thereby accelerating the gas exhaust.

In this embodiment, the first support section 1211 and the second support section 1212 are provided, and the side surface of the first support section 1211 facing the gas flow channel 13 is provided with the guide inclined surface 1213, so that vortices can be formed by the gas flow in the confluence region 132, thereby accelerating the gas exhaust, thereby effectively reducing the internal pressure of the battery cell 100, and reducing the probability of thermal runaway in the battery cell 100.

According to an embodiment of this application, as shown in FIG. 9, a fillet is provided between the guide inclined surface 1213 and an end surface of the first support rib 121.

It can be understood that a junction between the guide inclined surface 1213 and the end surface of the first support rib 121 is formed as an arc surface, where the arc surface can play a guiding role for the gas flow entering the gas flow channel 13, allowing the gas flow to smoothly enter the gas flow channel 13, thereby effectively reducing the generation of vortices at the inlet of the gas flow channel 13, improving the flow rate of the gas flow and the flow smoothness of the gas flow, allowing the gas generated in the battery cell 100 to quickly flow to the explosion-proof valve and be discharged to the outside of the battery cell 100, and effectively reducing the occurrence of thermal runaway in the battery cell 100.

In this embodiment, the fillet is provided between the guide inclined surface 1213 and the end surface of the first support rib 121, so that the generation of vortices at the inlet of the gas flow channel 13 can be effectively reduced, the flow rate of the gas flow and the flow smoothness of the gas flow can be improved, and the gas generated in the battery cell 100 can quickly flow to the explosion-proof valve and be discharged to the outside of the battery cell 100, thereby effectively reducing the occurrence of thermal runaway in the battery cell 100.

According to an embodiment of this application, a fillet radius between the guide inclined surface 1213 and the end surface of the first support rib 121 is 2.5 mm-5 mm.

For example, the fillet radius between the guide inclined surface 1213 and the end surface of the first support rib 121 may be 2.5 mm, 3 mm, 3.5 mm, 4 mm, 4.5 mm, or 5 mm.

In this embodiment, the fillet radius between the guide inclined surface 1213 and the end surface of the first support rib 121 is set to be 2.5 mm-5 mm, so that the fillet between the guide inclined surface 1213 and the end surface of the first support rib 121 is not excessively large, facilitating the formation of the fillet and reducing the impact on the guide inclined surface 1213. In addition, the fillet between the guide inclined surface 1213 and the end surface of the first support rib 121 is not excessively small, facilitating the reduction of vortices, thereby improving the flow rate of the gas flow and the flow smoothness of the gas flow, and improving the gas exhaust effect.

According to an embodiment of this application, as shown in FIG. 9, the side surface of the first support section 1211 facing the gas flow channel 13 further includes a flow guide inclined surface 1214. The flow guide inclined surface 1214 is connected to an end of the guide inclined surface 1213 facing the second support section 1212. In the direction from the first support section 1211 to the second support section 1212, the flow guide inclined surface 1214 extends obliquely toward the other side surface of the first support rib 121 facing away from the gas flow channel 13. The confluence region 132 is formed between the flow guide inclined surfaces 1214 of the two first support ribs 121.

It can be understood that an inclination direction of the flow guide inclined surface 1214 is opposite to an inclination direction of the guide inclined surface 1213, so that the guide inclined surface 1213 of the same first support section 1211 can hinder the movement of the gas flow entering from the end facing away from the guide inclined surface 1213 in the length direction. In this way, in a case that the gas flow moves from the two guide sections 131 to the confluence region 132, when the gas flow moves to the flow guide inclined surface 1214, the flow guide inclined surface 1214 hinders the flow of the gas flow, thereby changing an original flow trajectory of the gas flow, making the gas flow move along a tangent direction of the flow guide inclined surface 1214. In addition, since the two first support ribs 121 are rotationally symmetrically arranged with respect to the center of the support plate 11, movement directions of two gas flows entering the confluence region 132 are opposite, and the two gas flows do not directly collide with each other, thereby further facilitating the generation of vortices and accelerating the gas exhaust.

In this embodiment, the flow guide inclined surface 1214 is provided, so that the original flow trajectory of the gas flow can be changed, making the movement directions of the two gas flows entering the confluence region 132 opposite, and making the two gas flows not collide with each other directly, thereby further facilitating the generation of vortices and accelerating the gas exhaust.

According to an embodiment of this application, as shown in FIG. 9, an included angle between the flow guide inclined surface 1214 and the length direction of the support plate 11 is greater than an included angle between the guide inclined surface 1213 and the length direction of the support plate 11.

The included angle between the flow guide inclined surface 1214 and the length direction of the support plate 11 refers to an included angle between a tangent of the flow guide inclined surface 1214 and an edge of the support plate 11 in the length direction. The included angle between the guide inclined surface 1213 and the length direction of the support plate 11 refers to an included angle between the tangent of the guide inclined surface 1213 and the edge of the support plate 11 in the length direction.

Specifically, a length dimension of the flow guide inclined surface 1214 in the length direction of the support plate 11 can be controlled by controlling the size of the included angle between the flow guide inclined surface 1214 and the length direction of the support plate 11, and a length dimension of the guide inclined surface 1213 in the length direction of the support plate 11 can be controlled by controlling the size of the included angle between the guide inclined surface 1213 and the length direction of the support plate 11, thereby limiting the sizes of the guide section 131 and the confluence region 132.

In this embodiment, the included angle between the flow guide inclined surface 1214 and the length direction of the support plate 11 is greater than the included angle between the guide inclined surface 1213 and the length direction of the support plate 11, so that a range of the confluence region 132 can be limited to be smaller than a range of the guide section 131, thereby limiting the range of the confluence region 132 to the position of the explosion-proof valve, and improving the gas exhaust effect.

According to an embodiment of this application, as shown in FIG. 9, the flow guide inclined surface 1214 is connected to the guide inclined surface 1213 via a circular arc.

In this embodiment, the flow guide inclined surface 1214 is set to be connected to the guide inclined surface 1213 via the circular arc, so that the generation of vortices at a junction between the flow guide inclined surface 1214 and the guide inclined surface 1213 can be reduced, thereby increasing the flow rate of the gas flow, further accelerating the generation of vortices, allowing the gas flow to be quickly discharged from the inside of the battery cell 100, reducing the internal pressure of the battery cell 100, and reducing the occurrence of thermal runaway in the battery cell 100.

According to an embodiment of this application, a side surface of the second support section 1212 facing the gas flow channel 13 is a plane parallel to the length direction of the support plate 11.

Specifically, a cross-section of the second support section 1212 is rectangular, a side surface of the second support section 1212 in a length direction is flush with the edge of the support plate 11 in the length direction, and the other side is parallel to a plane in the length direction of the support plate 11.

In this embodiment, the side surface of the second support section 1212 facing the gas flow channel 13 is set as the plane parallel to the length direction of the support plate 11, so that the production convenience of the support frame 12 can be improved, and the production rate of the support frame 12 can be improved. In addition, the size of the gas flow channel 13 can be easily controlled, ensuring the gas exhaust effect.

According to an embodiment of this application, in the width direction of the support plate 11, a ratio of a width of the second support section 1212 to a maximum width of the first support section 1211 is 0.25-0.45.

For example, in the width direction of the support plate 11, the ratio of the width of the second support section 1212 to the maximum width of the first support section 1211 may be 0.25, 0.3, 0.4, or 0.45.

In this embodiment, the ratio of the width of the second support section 1212 to the maximum width of the first support section 1211 is set to be 0.25-0.45, so that the width of the second support section 1212 is not excessively large, ensuring the width of the gas flow channel 13, and meeting the gas exhaust demand of the battery cell 100. In addition, the width of the second support section 1212 is not excessively small, helping to improve the support effect for the support plate 11, thereby improving the support strength of the bottom support 10, and effectively reducing the risk of the bottom support 10 being crushed.

According to an embodiment of this application, a ratio of a projection area of the support frame 12 within the first surface to an area of the first surface is 0.15-0.4.

For example, the ratio of the projection area of the support frame 12 within the first surface to the area of the first surface may be 0.15, 0.2, 0.25, 0.3, 0.35, or 0.4.

In this embodiment, the ratio of the projection area of the support frame 12 within the first surface to the area of the first surface is set to be 0.15-0.4. This helps to improve the structural strength of the bottom support 10 and improve its structural stability, thereby effectively preventing the bottom support from being crushed. In addition, this can also limit the flow area of the gas flow channel 13, so that the flow area of the gas flow channel 13 can meet the gas exhaust demand, allowing the gas generated during the cycling of the battery cell 100 to be discharged in time, and reducing the internal pressure of the battery cell 100, thereby reducing the probability of thermal runaway in the battery cell 100, and improving the use reliability and service life of the battery cell 100.

According to an embodiment of this application, in the thickness direction of the support plate 11, a height of the support frame 12 is 0.6 mm-5 mm.

For example, in the thickness direction of the support plate 11, the height of the support frame 12 may be 0.6 mm, 0.7 mm, 0.8 mm, 0.9 mm, 1 mm, 2 mm, 3 mm, 4 mm, or 5 mm. The amount of gas generated in different types of battery cells 100 varies, so that the height of the support frame 12 can be selected according to the amount of the gas generated. The bottom support 10 can not only ensure the smoothness of the gas exhaust of the battery cell 100, but also reduce the occupied space of the bottom support 10, thereby increasing the energy density of the battery cell 100.

In this embodiment, the height of the support frame 12 in the thickness direction of the support plate 11 is set to be 0.6 mm-5 mm, so that the bottom support 10 can not only ensure the smoothness of the gas exhaust of the battery cell 100, but also reduce the occupied space of the bottom support 10, thereby increasing the energy density of the battery cell 100.

According to an embodiment of this application, in the thickness direction of the support plate 11, the height of the support frame 12 is 0.6 mm-3 mm.

For example, in the thickness direction of the support plate 11, the height of the support frame 12 may be 0.6 mm, 0.7 mm, 0.8 mm, 0.9 mm, 1 mm, 2 mm, or 3 mm.

In this embodiment, the height of the support frame 12 in the thickness direction of the support plate 11 is set to be 0.6 mm-3 mm, so that the height of the support frame 12 is not excessively high, helping to increase the energy density of the battery cell 100. In addition, the height of the support frame 12 is not excessively small, so that the height of the support frame 12 can meet the gas exhaust demand, thereby improving the gas exhaust effect.

According to an embodiment of this application, the battery cell 100 is a lithium iron phosphate battery 1000, and the height of the support frame 12 is 0.6 mm-1 mm; or the battery cell 100 is a ternary polymer lithium battery 1000, and the height of the support frame 12 is 0.6 mm-3 mm.

In some specific embodiments, the battery cell 100 is a lithium iron phosphate battery 1000, and the height of the support frame 12 is 0.6 mm-1 mm. For example, the height of the support frame 12 may be 0.6 mm, 0.7 mm, 0.8 mm, 0.9 mm, or 1 mm. In other specific embodiments, the battery cell 100 is a ternary polymer lithium battery 1000, and the height of the support frame 12 is 0.6 mm-3 mm. For example, the height of the support frame 12 may be 0.6 mm, 0.7 mm, 0.8 mm, 0.9 mm, 1 mm, 2 mm, or 3 mm.

Specifically, the lithium iron phosphate battery 1000 refers to a lithium-ion battery 1000 using lithium iron phosphate as a positive electrode material. The ternary polymer lithium battery 1000 refers to a lithium battery 1000 using lithium nickel cobalt manganese oxide as a positive electrode material and graphite as a negative electrode material. Since the ternary material has more surface free lithium compounds on a surface, the amount of gas generated in the ternary polymer lithium battery 1000 during cycling is greater than the amount of gas generated in the lithium iron phosphate battery 1000.

In this embodiment, when the battery cell 100 is a lithium iron phosphate battery 1000, the height of the support frame 12 is set to be 0.6 mm-1 mm, and when the battery cell 100 is a ternary polymer lithium battery 1000, the height of the support frame 12 is set to be 0.6 mm-3 mm, so that the height of the support frame 12 can be designed according to the type of the battery cell 100, the bottom support 10 can meet the gas exhaust demand, and the occupied space of the bottom support 10 can also be reduced, increasing the energy density of the battery cell 100.

According to an embodiment of this application, a thickness of the support plate 11 is 0.4 mm-0.6 mm.

For example, the thickness of the support plate 11 may be 0.4 mm, 0.5 mm, or 0.6 mm.

In this embodiment, the thickness of the support plate 11 is set to be 0.4 mm-0.6 mm, so that the support plate 11 can meet the support function of the bottom support 10 for the electrode assembly 30, and the materials used of the support plate 11 can also be reduced, thereby reducing the production difficulty and production cost of the support plate 11. In addition, a thickness range of the support plate 11 is set to be 0.4 mm to 0.6 mm, so that the thickness of the bottom support 10 can also be reduced, thereby increasing the energy density of the battery cell 100.

According to an embodiment of this application, the bottom support 10 is a polypropylene component, or the bottom support 10 is an aluminum component.

In some specific embodiments, the bottom support 10 is a polypropylene component. In other specific embodiments, the bottom support 10 is an aluminum component.

Specifically, polypropylene, abbreviated as PP, is a polymer formed by polymerization of propylene. Polypropylene is a thermoplastic synthetic resin with excellent performance, which has good corrosion resistance, heat resistance, electrical insulation, high-strength mechanical properties, and high wear-resistant processing performance. Thus, when the bottom support 10 is made of a polypropylene material, which can reduce the possibility of the bottom support 10 being corroded by an electrolyte or crushed, thereby improving the reliability and service life of the bottom support 10. In addition, the price of the polypropylene material is relatively low, so that the polypropylene material used can also reduce the production cost of the bottom support 10, thereby reducing the production cost of the battery cell 100.

An aluminum material is a product made of aluminum and other alloy elements, which has good structural strength, corrosion resistance, heat resistance, and electrical insulation. In addition, the weight of the aluminum material is relatively light, so that when the bottom support 10 is made of the aluminum material, the support performance and corrosion resistance of the bottom support 10 can be met, and the weight of the bottom support 10 can also be reduced, thereby reducing the weight of the battery cell 100, and allowing the battery 1000 to be lightweight.

In this embodiment, the bottom support 10 is set as a polypropylene component, so that the possibility of the bottom support 10 being corroded by an electrolyte or crushed can be reduced, thereby improving the reliability and service life of the bottom support 10. In addition, the production cost of the battery cell 100 can also be reduced. The bottom support 10 is set as an aluminum component, so that the support performance and corrosion resistance of the bottom support 10 can be improved, and the weight of the bottom support 10 can also be reduced, thereby reducing the weight of the battery cell 100, and allowing the battery 1000 to be lightweight.

According to an embodiment of the second aspect of this application, a battery 1000 includes the battery cell 100 according to the embodiments of the first aspect of this application.

In some specific embodiments of this application, as shown in FIG. 3, the battery 1000 may further include a main box 201 and a cover plate 202. The main box 201 has a cavity with an open top. A plurality of battery cells 100 are disposed in the cavity. The cover plate 202 is sealed at the top of the main box 201 through fasteners.

Optionally, the plurality of battery cells 100 may be stacked and arranged in the cavity along a thickness direction of the battery cells 100.

Optionally, the main box 201 is formed as a rectangular box shape. A cavity is defined in an inner side of the main box 201. The top of the cavity is open. A plurality of first fixing holes are provided on the main box 201. The cover plate 202 is formed as a horizontally arranged flat plate shape. A plurality of second fixing holes running through the cover plate 202 in an up-down direction are provided on the cover plate 202. The plurality of first fixing holes are in one-to-one correspondence with the plurality of second fixing holes and are opposite up and down. The battery 1000 further includes a plurality of fasteners. The plurality of fasteners pass through the first fixing holes and the second fixing holes to fasten the cover plate 202 to an upper side of the main box 201 body 200.

Optionally, the cover plate 202 may be a carbon steel plate, an aluminum plate, or a composite material plate.

In this embodiment, the box 200 is set as the main box 201 and the cover plate 202 arranged separately. The battery cell 100 can be conveniently loaded into the box 200. The main box 201 and the cover plate 202 are connected through fasteners, which can achieve detachable connection, facilitating maintenance and replacement. In addition, the connection strength between the main box 201 and the cover plate 202 can be ensured, ensuring the overall structural strength of the battery 1000.

In some specific embodiments of this application, a first adhesive layer is provided on a bottom wall of the cavity, and bottoms of the plurality of battery cells 100 are connected to a bottom wall of the main box 201 through the first adhesive layer; and/or a second adhesive layer is provided on the cover plate 202, and tops of the plurality of battery cells 100 are connected to the cover plate 202 through the second adhesive layer.

The battery 1000 may include only the first adhesive layer, only the second adhesive layer, or both the first adhesive layer and the second adhesive layer. The first adhesive layer is configured to bond the bottom wall of the main box 201 and the battery cell 100, and the second adhesive layer is configured to bond the cover plate 202 and the battery cell 100, so that the plurality of battery cells 100 are reliably fixed in the box 200, improving the reliability and stability of the connection between the battery cell 100 and the box 200, and preventing the battery cells 100 from shaking in the box 200.

In this embodiment, the first adhesive layer and the second adhesive layer are provided, the bottom of the battery cell 100 is fixedly bonded to the bottom wall of the main box 201 through the first adhesive layer, and the top of the battery cell 100 is fixedly bonded to the cover plate 202 through the second adhesive layer, so that the overall strength of the battery 1000 can be improved, and the connection stability of the battery cell 100 can be ensured.

According to the battery 1000 of this embodiment of this application, the battery cell 100 according to the embodiments of the first aspect is provided, so that the overall performance of the battery 1000 is improved.

According to an embodiment of a third aspect of this application, an electric device includes the battery 1000 according to the embodiments of the second aspect of this application.

According to the electric device of this embodiment of this application, the battery 1000 according to the embodiments of the third aspect is provided, so that the overall performance of the electric device is improved.

A battery cell 100 according to two specific embodiments of this application will be described below with reference to FIG. 4 to FIG. 12.

### Embodiment 1

Referring to FIG. 4, the battery cell 100 includes an end cover 40, an adapting piece 50, an electrode assembly 30, a bottom support 10, and a housing 20, where the housing 20 is provided with an opening at one end. The end cover 40 is disposed on one side of the opening of the housing 20 and configured to seal the opening at one end of the housing 20. The housing 20 has an accommodating cavity 21. An explosion-proof valve is disposed at a bottom of the housing 20. Both the electrode assembly 30 and the bottom support 10 are disposed in the accommodating cavity 21. The bottom support 10 is disposed on a bottom wall of the accommodating cavity 21. The electrode assembly 30 is disposed on an upper side of the bottom support 10. The bottom support 10 and the bottom wall of the housing 20 jointly define a gas exhaust space. The bottom support 10 is a polypropylene component.

Specifically, the bottom support 10 further includes a support plate 11 and a support frame 12, where the support plate 11 is formed as a rectangular plate, and the support frame 12 is disposed on a lower side of the support plate 11.

The support frame 12 includes two first support ribs 121 and two second support ribs 122, where the first support rib 121 and the second support rib 122 all extend along a length direction of the support plate 11. The two first support ribs 121 are respectively arranged at two ends of the support plate 11 in a width direction, and the two first support ribs 121 are flush with two side edges of the support plate 11 in the width direction respectively. The two second support ribs 122 are respectively arranged at two ends of the support plate 11 in the length direction and disposed between the two first support ribs 121. In addition, in the length direction of the support plate 11, one end of the second support rib 122 is flush with an end edge of the support plate 11 in the length direction, and the other end of the second support rib 122 extends toward the middle of the support plate 11 and is provided with an arc surface protruding in a direction facing away from the end edge of the support plate 11. A gas flow channel 13 is defined between the two first support ribs 121.

Further, in a direction from one end to the other end in the length direction of the support plate 11, a side edge of the first support rib 121 facing the gas flow channel 13 extends along a circular arc protruding toward the gas flow channel 13. A diameter of the circular arc is 130 mm-180 mm.

In the width direction of the support plate 11, widths of two ends of the first support rib 121 in the length direction of the support plate 11 are 8 mm-11 mm. A maximum width of the first support rib 121 is 12 mm-16 mm. In the length direction of the support plate 11, a length of the second support rib 122 is 20 mm-30 mm. A ratio of the length of the second support rib 122 to the length of the support plate 11 is 0.07-0.12. In a thickness direction of the support plate 11, a thickness of the support plate 11 is 0.4 mm-0.6 mm, and a height of the support frame 12 is 0.6 mm-3 mm.

During the cycling of the battery cell 100, a large amount of gas is generated inside the battery cell 100. The gas can enter the gas flow channel 13 from two ends in a length direction of the first support rib 121, and then is guided to the explosion-proof valve through the gas flow channel 13 and discharged. Therefore, the bottom support 10 of this application can improve the gas exhaust inside the battery cell 100 and reduce the internal pressure of the battery cell 100, thereby reducing the probability of thermal runaway in the battery cell 100 and the risk of cracking of the weld of the housing 20 caused by excessive pressure.

According to the battery cell 100 of this embodiment of this application, the bottom support 10 according to the embodiments of the first aspect is provided. The gas flow channel 13 is defined by the two first support ribs 121, and the two first support ribs 121 are flush with the two side edges of the support plate 11 in the width direction respectively. This can effectively prevent formation of a flow stagnation region between the first support rib 121 and the edge of the support plate 11, reduce the swelling caused by the accumulation of a gas flow at a junction between the first support rib 121 and the support plate 11, and allow the gas flow to enter the gas flow channel 13 from two ends of the gas flow channel 13, thereby improving the gas exhaust effect. In addition, this can also increase a cross-sectional area of the gas flow channel 13, thereby further increasing the gas exhaust space of the bottom support 10, improving the gas exhaust effect, reducing the internal pressure of the battery cell 100, and reducing the probability of thermal runaway in the battery cell 100 and the risk of cracking of the weld of the housing 20 caused by excessive pressure.

### Embodiment 2

Referring to FIG. 9, the structure of this embodiment is substantially the same as the structure of Embodiment 1, where the same components use the same reference signs. The only difference is that the support frame 12 in Embodiment 1 includes two first support ribs 121 and two second support ribs 122, and the side edge of the first support rib 121 facing the gas flow channel 13 extends along a circular arc, while the support frame 12 in this Embodiment 2 includes only two first support ribs 121, and the first support rib 121 includes a first support section 1211 and a second support section 1212.

Specifically, the first support section 1211 and the second support section 1212 are sequentially connected in the length direction of the support plate 11. A part of a side surface of the first support section 1211 facing the gas flow channel 13 is formed as a guide inclined surface 1213. In a direction from the first support section 1211 to the second support section 1212, the guide inclined surface 1213 extends obliquely toward the other first support rib 121. The other part is formed as a flow guide inclined surface 1214. The flow guide inclined surface 1214 is connected to an end of the guide inclined surface 1213 facing the second support section 1212. In the direction from the first support section 1211 to the second support section 1212, the flow guide inclined surface 1214 extends obliquely toward the other side surface of the first support rib 121 facing away from the gas flow channel 13, and the flow guide inclined surface 1214 is connected to the guide inclined surface 1213 via a circular arc. One end of the second support section 1212 is connected to the flow guide inclined surface 1214, and the other end of the second support section 1212 extends along the length direction of the support plate 11, and a side surface of the second support section 1212 facing the gas flow channel 13 is a plane parallel to the length direction of the support plate 11.

Further, the gas flow channel 13 includes a guide section 131 and a confluence region 132. Two guide sections 131 are provided and respectively connected to two sides of the confluence region 132 in the length direction of the support plate 11. The confluence region 132 is formed between the flow guide inclined surfaces 1214 of the two first support ribs 121.

In addition, a fillet is provided between the guide inclined surface 1213 and the end surface of the first support rib 121, and a fillet radius is 2.5 mm-5 mm. In the width direction of the support plate 11, a ratio of a width of the second support section 1212 to a maximum width of the first support section 1211 is 0.25-0.45.

According to the battery cell 100 of this embodiment of this application, the bottom support 10 of this embodiment is provided, so that the gas exhaust effect can be improved, and the number of support ribs can also be reduced, thereby simplifying the production process of the bottom support 10, reducing the production cost of the bottom support 10, improving the production rate of the bottom support 10, reducing the overall cost of the battery cell 100, and improving the assembly speed of the battery cell 100.

In conclusion, it should be noted that the above embodiments are merely intended for describing the technical solutions of this application but not for limiting this application. Although this application is described in detail with reference to the foregoing embodiments, those of ordinary skill in the art should understand that they may still make modifications to the technical solutions described in the foregoing embodiments or make equivalent replacements to some or all technical features thereof without departing from the scope of the technical solutions of the embodiments of this application. All such modifications and equivalent replacements shall fall within the scope of the claims and specification of this application. In particular, as long as there is no structural conflict, the various technical features mentioned in the various embodiments can be combined in any manner. This application is not limited to the specific embodiments disclosed herein, but includes all technical solutions falling within the scope of the claims.

## Claims

1. A battery cell, comprising:
a housing, wherein the housing defines an accommodating cavity, and an explosion-proof valve is disposed at a bottom of the housing;
a bottom support, wherein the bottom support is disposed on a bottom wall of the accommodating cavity, and the bottom support comprises:
a support plate, wherein a side surface of the support plate facing the bottom wall of the accommodating cavity is a first surface; and
a support frame, wherein the support frame comprises at least one first support rib, the first support rib is disposed on the first surface and extends along a length direction of the support plate, at least one of the first support ribs is arranged on at least one side edge of the support plate in a width direction, and a gas flow channel in communication with the explosion-proof valve is defined between the first support rib, the first surface, and the bottom wall of the accommodating cavity; and
an electrode assembly, wherein the electrode assembly is disposed in the accommodating cavity and supported on a second surface of the support plate, and the first surface and the second surface are disposed opposite each other in a thickness direction of the support plate.

2. The battery cell according to claim 1, wherein two first support ribs are provided, and the two first support ribs are respectively arranged at two side edges of the support plate in the width direction; and
the two first support ribs are at least partially flush with the two side edges of the support plate in the width direction respectively.

3. The battery cell according to claim 1 or 2, wherein the first support rib extends from one end to the other end in the length direction of the support plate, and in a direction from the two ends to the middle in the length direction of the support plate, a width of the first support rib in the width direction of the support plate gradually increases.

4. The battery cell according to claim 3, wherein in a direction from one end to the other end in the length direction of the support plate, a side edge of the first support rib facing the gas flow channel extends along an arc protruding toward the gas flow channel.

5. The battery cell according to claim 4, wherein the side edge of the first support rib extends along a circular arc, and a diameter of the circular arc is 130 mm-180 mm.

6. The battery cell according to any one of claims 3 to 5, wherein in the width direction of the support plate, widths of two ends of the first support rib in the length direction of the support plate are 8 mm-11 mm.

7. The battery cell according to any one of claims 3 to 6, wherein in the width direction of the support plate, a maximum width of the first support rib is 12 mm-16 mm.

8. The battery cell according to any one of claims 1 to 7, wherein the support frame further comprises two second support ribs, the second support ribs extend along the length direction of the support plate and are disposed between the two first support ribs, and the two second support ribs are respectively arranged at two ends of the support plate in the length direction.

9. The battery cell according to claim 8, wherein in the length direction of the support plate, one end of the second support rib is flush with an end edge of the support plate in the length direction.

10. The battery cell according to claim 9, wherein in the length direction of the support plate, a length of the second support rib is 20 mm-30 mm.

11. The battery cell according to claim 9 or 10, wherein in the length direction of the support plate, a ratio of the length of the second support rib to a length of the support plate is 0.07-0.12.

12. The battery cell according to any one of claims 9 to 11, wherein an end surface of the other end of the second support rib is an arc surface protruding in a direction facing away from the end edge of the support plate.

13. The battery cell according to any one of claims 1 to 12, wherein the gas flow channel comprises a guide section and a confluence region; two guide sections are provided and respectively connected to two sides of the confluence region in the length direction of the support plate; at least one side wall of the guide section in the width direction of the support plate is provided with a guide inclined surface; and in a direction from the guide section to the confluence region, the guide inclined surfaces of the two guide sections respectively extend obliquely toward two sides of the confluence region in the width direction of the support plate.

14. The battery cell according to claim 13, wherein the two first support ribs are rotationally symmetrically arranged with respect to the center of the support plate within the first surface.

15. The battery cell according to claim 14, wherein the first support rib comprises a first support section and a second support section sequentially connected in the length direction of the support plate; at least part of a side surface of the first support section facing the gas flow channel is formed as the guide inclined surface; and in a direction from the first support section to the second support section, the guide inclined surface extends obliquely toward the other first support rib.

16. The battery cell according to claim 15, wherein a fillet is provided between the guide inclined surface and an end surface of the first support rib.

17. The battery cell according to claim 16, wherein a fillet radius between the guide inclined surface and the end surface of the first support rib is 2.5 mm-5 mm.

18. The battery cell according to any one of claims 15 to 17, wherein the side surface of the first support section facing the gas flow channel further comprises a flow guide inclined surface; the flow guide inclined surface is connected to an end of the guide inclined surface facing the second support section; in the direction from the first support section to the second support section, the flow guide inclined surface extends obliquely toward the other side surface of the first support rib facing away from the gas flow channel; and the confluence region is formed between the flow guide inclined surfaces of the two first support ribs.

19. The battery cell according to claim 18, wherein an included angle between the flow guide inclined surface and the length direction of the support plate is greater than an included angle between the guide inclined surface and the length direction of the support plate.

20. The battery cell according to claim 18 or 19, wherein the flow guide inclined surface is connected to the guide inclined surface via a circular arc.

21. The battery cell according to any one of claims 15 to 20, wherein a side surface of the second support section facing the gas flow channel is a plane parallel to the length direction of the support plate.

22. The battery cell according to claim 21, wherein in the width direction of the support plate, a ratio of a width of the second support section to a maximum width of the first support section is 0.25-0.45.

23. The battery cell according to any one of claims 1 to 21, wherein a ratio of a projection area of the support frame within the first surface to an area of the first surface is 0.15-0.4.

24. The battery cell according to any one of claims 1 to 23, wherein in the thickness direction of the support plate, a height of the support frame is 0.6 mm-5 mm.

25. The battery cell according to any one of claims 1 to 24, wherein in the thickness direction of the support plate, the height of the support frame is 0.6 mm-3 mm.

26. The battery cell according to claim 25, wherein the battery cell is a lithium iron phosphate battery, and the height of the support frame is 0.6 mm-1 mm; or
the battery cell is a ternary polymer lithium battery, and the height of the support frame is 0.6 mm-3 mm.

27. The battery cell according to any one of claims 1 to 26, wherein a thickness of the support plate is 0.4 mm-0.6 mm.

28. The battery cell according to any one of claims 1 to 27, wherein the bottom support is a polypropylene component, or the bottom support is an aluminum component.

29. A battery, comprising the battery cell according to any one of claims 1 to 28.

30. An electric device, comprising the battery according to claim 29.
